# EUROPEAN PATENT APPLICATION

(11) **EP 1 435 670 A1**
(43) Date of publication of application: **07.07.2004**
(21) Application number: 02801505.5
(22) Date of filing: 09.10.2002
(51) Int. Cl.: H01M 4/58, H01M 4/02, H01M 10/40

(54) **LITHIUM SECONDARY CELL AND METHOD FOR MANUFACTURING NEGATIVE PLATE ACTIVE MATERIAL USED THEREFOR**

(30) Priority: 10.10.2001 JP 2001312910
(71) Applicant: NGK INSULATORS, LTD., Nagoya-City, Aichi Prefecture 467-8530 (JP)
(72) Inventor: YOSHIDA, Toshihiro c/o NGK INSULATORS, LTD., Nagoya-shi, Aichi 467-8530 (JP)
(74) Representative: Leson, Thomas Johannes Alois, Dipl.-Ing.
(86) International application number: PCT/JP2002/010457
(87) International publication number: WO 2003/034518

(57) **Abstract**

A lithium secondary battery of the present invention is characterized in that the negative active material has a lattice strain of 1% or less as measured by X-ray diffractometry, the negative active material has a crystallite diameter of 150 Å or more as measured by X-ray diffractometry, and, in the Raman spectrum of the negative active material obtained with an argon ion laser beam, a ratio (Ib/Ia) of peak intensity (Ib) at 1,330 to 1,360 cm⁻¹ to peak intensity (Ia) at 1,550 to 1,580 cm⁻¹ satisfies a relation of 0.1 ≦ Ib/Ia ≦ 0.8; hardly shows a reduction in relative discharge capacity even at high temperatures; and is superior in cycle characteristic.

## Description

### Technical Field

The present invention relates to a lithium secondary battery and a process for production of a negative active material used therein, particularly to improvement of negative active material.

### Background Art

In recent years, lithium secondary battery (hereinafter may be referred to simply as "battery") has found wide applications as a battery for an electric source of portable electronic appliances such as mobile telephone, VTR, note type computer and the like. Further, lithium secondary battery, having a single cell voltage of about 4 V (which is higher than those of conventional secondary batteries such as lead-acid battery and the like) and a high energy density, is drawing people's attention not only as an electronic source for the above-mentioned portable electronic appliances but also as an electric source for start-up of a motor of an electric vehicle (EV) or hybrid electric vehicle (HEV) whose use by the public as a low-pollution vehicle is promoted actively in the midst of recent environmental problems.

This lithium secondary battery is constituted by a positive electrode and a negative electrode both capable of occluding and releasing lithium ion reversibly, and a non-aqueous electrolytic solution which is a solution of lithium ion dissolved in a non-aqueous solvent.

As the non-aqueous electrolytic solution, there is generally used a solution obtained by dissolving a lithium salt in a carbonic acid ester solvent such as ethylene carbonate (EC), propylene carbonate (PC) or the like.

Also, as the active material for positive electrode, there is used a lithium compound oxide such as lithium cobalt oxide (LiCoO₂), lithium nickel oxide (LiNiO₂), lithium manganese oxide (LiMn₂O₄) or the like.

As the active material for negative electrode, there is used an amorphous carbon material called hard carbon, or a highly graphitized carbon material such as artificial graphite, natural graphite or the like.

In lithium secondary battery, there has heretofore been used frequently, as the negative active material, a highly graphitized carbon material because it can give a battery superior in relative discharge capacity.

It is well known that lithium secondary battery tends to become a high-temperature state when overcharged or used continuously. In a lithium secondary battery using the above-mentioned highly graphitized carbon material, it is known that the carbon material is deteriorated in a high-temperature state of battery and gives rise to a reduction in relative discharge capacity. The present inventors applied a high load to a battery using a highly graphitized carbon material as the negative electrode active material and used the battery at a high temperature, and then decomposed the battery to examine the negative active material. As a result, it was found that lithium ion was trapped on the surface of the highly graphitized carbon material and was in a dedoping-impossible state. From this, it can be presumed that when the battery became a high-temperature state, the surface of the negative active material composed of a highly graphitized carbon material reacted with the non-aqueous electrolytic solution and the function of the highly graphitized carbon material as a negative active material was deteriorated.

As a relevant prior art, there is disclosed the following process (see, for example, Patent Literature 1 shown below), i.e. a process for producing a negative active material constituted by composite particles composed of mother particles (graphite) capable of occluding and releasing lithium ion and child particles (an amorphous carbon material) consisting of carbon having particle diameters smaller than those of the mother particles, present on the surfaces of the mother particles so as to form an integral material, by using a mechanochemical treatment which comprises mixing a powder of the mother particles (graphite) with a powder of the child particles (an amorphous carbon material) and applying a compressive force and a shear force to the resulting mixed powder to obtain composite particles wherein the child particles (an amorphous carbon material) are present on the surfaces of the mother particles (graphite) so as to form an integral material. By using, in a lithium secondary battery, a negative active material which is formed by covering the surfaces of mother particles consisting of graphite, with an amorphous carbon material highly resistant to high temperatures and which retains a graphite property of superior relative discharge capacity and yet is low in high-temperature deterioration, it is possible to obtain a battery capable of maintaining its energy density and output density at high levels even at a high load, i.e. at high temperatures.

However, in the process which comprises applying a compressive force and a shear force to a mixed powder of mother particles (graphite) and child particles (an amorphous carbon material) to make the mother particles (graphite) and the child particles (an amorphous carbon material) into one integral material, the carbon material hardly sticks to the surfaces of the graphite; therefore, there has been a problem that when the battery obtained becomes a high-temperature state, the mother particles consisting of graphite and the child particles consisting of a carbon material tend to peel from each other and this negative active material is deteriorated easily.

### Patent Literature 1: JP-A-11-265716

The present invention has been made in view of such past problems and aims at providing a lithium secondary battery which hardly shows a reduction in relative discharge capacity even at high temperatures and is superior in cycle characteristic by using a negative active material low in deterioration wherein only the surface and its vicinity are made of an amorphous carbon material and its inside is made of a crystalline graphite; and a process for producing a negative active material used therein.

### Disclosure of the Invention

According to the present invention there are provided a lithium secondary battery and a process for producing a negative active material used therein as described below.
[1] A lithium secondary battery comprising a positive electrode formed using a positive active material and a negative electrode formed using a negative active material, characterized in that
   the negative active material has a lattice strain of 1% or less as measured by X-ray diffractometry,
   the negative active material has a crystallite diameter of 150 Å or more as measured by X-ray diffractometry, and
   in a Raman spectrum of the negative active material obtained with an argon ion laser beam, a ratio (Ib/Ia) of peak intensity (Ib) at 1,330 to 1,360 cm⁻¹ to peak intensity (Ia) at 1,550 to 1,580 cm⁻¹ satisfies a relation of 0.1 ≦ (Ib/Ia) ≦ 0.8.
[2] A process for producing a negative active material for lithium secondary battery, which comprises heat-treating a raw material for a base material capable of occluding and releasing lithium ion, and a raw material for a surface material covering a surface of the base material, to produce a negative active material for lithium secondary battery comprising the base material and the surface material covering the surface of the base material, characterized in that
   the base material comprises a first base material which has come to have lithium ion occludability and releasability by the heat-treating and/or a second base material which is a carbon material inherently having lithium ion occludability and releasability, and
   the process comprises coating the raw material for the surface material on the surface of the raw material for the first base material and/or a raw material for the second base material to produce a composite raw material, and then heat-treating the composite raw material.
[3] A process for producing a negative active material for lithium secondary battery according to the above [2], wherein a material carbonizable by a heat treatment is used as the raw material for the first base material and as the raw material for the surface material.
[4] A process for producing a negative active material for lithium secondary battery according to the above [2] or [3], wherein a synthetic resin is used as the raw material for the first base material and as the raw material for the surface material.
[5] A process for producing a negative active material for lithium secondary battery according to any of the above [2] to [4], wherein a material graphitizable by a heat treatment is used as the raw material for the first base material.
[6] A process for producing a negative active material for lithium secondary battery according to any of the above [2] to [5], wherein a material capable of becoming an amorphous carbon material by a heat treatment is used as the raw material for the surface material.
[7] A process for producing a negative active material for lithium secondary battery according to any of the above [2] to [6], wherein an easily graphitizable resin is used as the raw material for the first base material.
[8] A process for producing a negative active material for lithium secondary battery according to any of the above [2] to [7], wherein an easily graphitizable carbon material is used as the raw material for the second base material.
[9] A process for producing a negative active material for lithium secondary battery according to any of the above [2] to [8], wherein a hardly graphitizable resin is used as the raw material for the surface material.
[10] A process for producing a negative active material for lithium secondary battery according to any of the above [2] to [9], wherein a powdered material is used as the raw material for the first base material and/or the raw material for the second base material.
[11] A process for producing a negative active material for lithium secondary battery according to any of the above [2] to [10], wherein as a method for the coating, there is used a spraying method which comprises dissolving the raw material for the surface material in an organic solvent and spraying the organic solution, in a mist, onto the raw material for the first base material and/or the raw material for the second base material and/or an immersion method which comprises immersing the raw material for the first base material and/or the raw material for the second base material in the organic solution.
[12] A process for producing a negative active material for lithium secondary battery according to any of the above [2] to [11], wherein as a method for the heat treatment, there is used a method which comprises conducting a heat treatment at such a temperature and for such a time as the raw material for the first base material, constituting the composite raw material is graphitized and the raw material for the surface material, constituting the composite raw material is not graphitized.
[13] A process for producing a negative active material for lithium secondary battery by a heat treatment of a graphitic carbon, characterized in that the graphitic carbon is heat-treated in an oxygen-containing atmosphere.
[14] A process for producing a negative active material for lithium secondary battery according to the above [13], wherein the heat treatment is conducted at a temperature of 500 to 1,000°C.
[15] A process for producing a negative active material for lithium secondary battery according to the above [13] or [14], wherein the heat treatment is conducted using a rotary kiln.
[16] A process for producing a negative active material for lithium secondary battery according to any of the above [13] to [15], wherein air is used as the oxygen-containing atmosphere.
[17] A process for producing a negative active material for lithium secondary battery according to any of the above [13] to [16], wherein a fibrous highly-graphitized carbon is used as the graphitic carbon.
[18] A process for producing a negative active material for lithium secondary battery by oxidation of a graphitic carbon, characterized in that the oxidation of the graphitic carbon is conducted by an oxidizing agent.
[19] A process for producing a negative active material for lithium secondary battery according to the above [18], wherein an inorganic acid is used as the oxidizing agent.
[20] A process for producing a negative active material for lithium secondary battery according to the above [18] or [19], wherein a mixed acid of concentrated nitric acid and concentrated sulfuric acid is used as the oxidizing agent.
[21] A process for producing a negative active material for lithium secondary battery by a physical treatment of a graphitic carbon, characterized in that the graphitic carbon is subjected to a high-impact treatment using a hard rotary body.
[22] A process for producing a negative active material for lithium secondary battery according to the above [21], wherein the circumferential rotary speed of the hard rotary body in the high-impact treatment is 50 to 100 m/sec.
[23] A process for producing a negative active material for lithium secondary battery according to the above [21] or [22], wherein a stainless steel-made or alumina-made rotary body is used as the hard rotary body.
[24] A process for producing a negative active material for lithium secondary battery according to any of the above [21] to [23], wherein a rotary blade is used as the hard rotary body.
[25] A lithium secondary battery comprising a positive electrode formed using a positive active material and a negative electrode formed using a negative active material, characterized in that the negative active material has been produced by a process for producing a negative active material for lithium secondary battery set forth in any of the above [2] to [24].
[26] A lithium secondary battery according to the above [1] or [25], wherein the positive active material is a lithium manganese compound oxide.
[27] A lithium secondary battery according to the above [26], wherein crystal structure of the lithium manganese compound oxide is a spinel structure.
[28] A lithium secondary battery according to the above [26] or [27], wherein the lithium manganese compound oxide contains a group IIIB element.
[29] A lithium secondary battery according to the above [28], wherein the group IIIB element is aluminum (Al) and/or boron (B).
[30] A lithium secondary battery according to any of the above [26] to [29], wherein the lithium manganese compound oxide contains vanadium (V).
[31] A lithium secondary battery according to any of the above [26] to [30], wherein the lithium manganese compound oxide contains nickel (Ni) and/or titanium (Ti).
[32] A lithium secondary battery according to any of the above [26] to [31], wherein the ratio of lithium (Li) and manganese (Mn) in the lithium manganese compound oxide is (Li/Mn) = 0.5 to 0.6 (molar ratio).
[33] A lithium secondary battery according to any of the above [1] and [25] to [32], wherein the battery capacity is 2 Ah or more.
[34] A lithium secondary battery according to any of the above [1] and [25] to [33], which is for mounting on a vehicle.
[35] A lithium secondary battery according to the above
[34], which is for engine start.
[36] A lithium secondary battery according to the above [34] or [35], which is for an electric vehicle or a hybrid electric vehicle.

### Brief Description of the Drawings

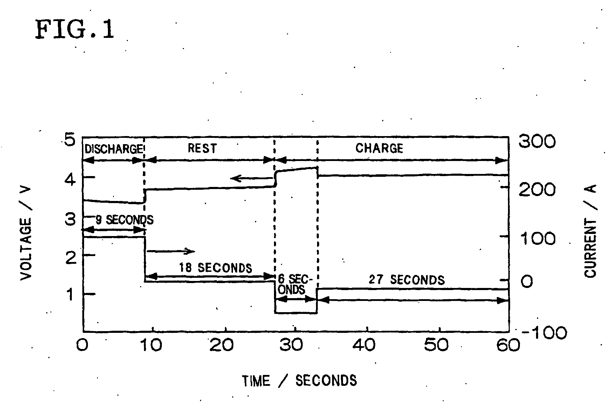

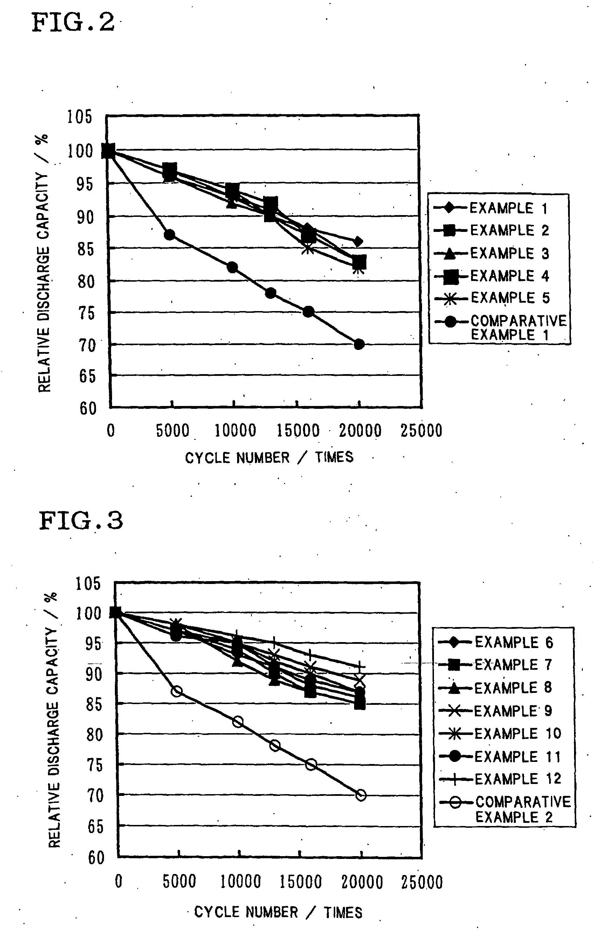

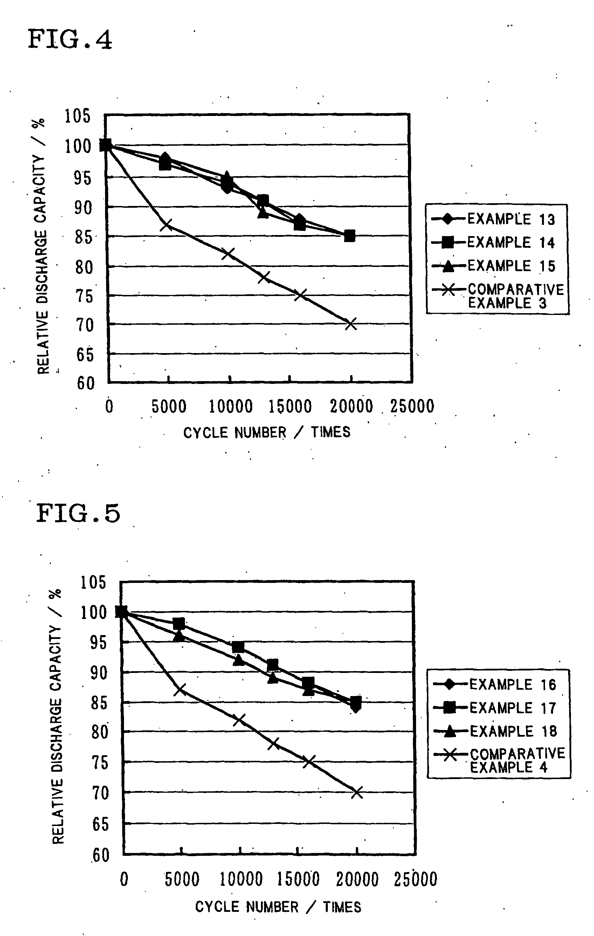

Fig. 1 is a graph showing a charge-discharge pattern in a cycle test. Fig. 2 is a graph showing the results of cycle tests of Examples 1 to 5 and Comparative Example 1. Fig. 3 is a graph showing the results of cycle tests of Examples 6 to 12 and Comparative Example 2. Fig. 4 is a graph showing the results of cycle tests of Examples 13 to 15 and Comparative Example 3. Fig. 5 is a graph showing the results of cycle tests of Examples 16 to 18 and Comparative Example 4.

### Best Mode for Carrying Out the Invention

The mode for carrying out the present invention is described specifically below with referring to the accompanying drawings.

The first aspect of the present invention is, as described above, a lithium secondary battery comprising a positive electrode formed using a positive active material and a negative electrode formed using a negative active material, characterized in that
the negative active material has a lattice strain of 1% or less as measured by X-ray diffractometry,
the negative active material has a crystallite diameter of 150 Å or more as measured by X-ray diffractometry, and
in the Raman spectrum of the negative active material obtained with an argon ion laser beam, a ratio (Ib/Ia) of peak intensity (Ib) at 1,330 to 1,360 cm⁻¹ to peak intensity (Ia) at 1,550 to 1,580 cm⁻¹ satisfies a relation of 0.1 ≦ (Ib/Ia) ≦ 0.8. Thereby, it is possible to provide, as shown in the results of Examples described later, a lithium secondary battery which hardly shows a reduction in relative discharge capacity even at high temperatures and which is superior in cycle characteristic.

In the present invention, the X-ray diffraction result of a negative active material was obtained by analyzing a diffraction image obtained from an ordinary X-ray powder diffractometry, using the integral width method of Wilson; specifically, there was used RINT 2000 Series Application Software "Analysis of Crystallite Size and Lattice Strain" (third edition, issued on Oct. 16 of 1996) produced by Rigaku Denki K.K. In this X-ray diffraction, counting time and X-ray intensity are adjusted so that the count number of diffraction peak becomes 5,000 or more, in order to obtain a measurement result of high accuracy. Further, as the peaks used for calculation, there are appropriately selected at least three peaks of largest intensity.

Also in the present invention, the Raman spectrum was specifically measured using a spectrophotometer, NR-1800 produced by Nihon Bunko K.K. and an argon laser beam of 5,145 Å wavelength, in a measurement range of 50 µm at an exposure time of 60 seconds; and it was shown by using the axis of abscissa as wave number (cm⁻¹) and the axis of ordinate as intensity. Here, intensity refers to the intensity of a light obtained by a charge-coupled device (CCD) or the like, and the peak intensity in a given wave number range refers to the intensity of each peak from baseline.

In the lithium secondary battery of the present invention, that only the surface and its vicinity of the negative active material used are made of an amorphous carbon material and the inside of the active material is made of graphite, is specified by particular values; and the crystallinity of the surface and its vicinity of the negative active material is specified by Raman spectrum and the crystallinity of the inside thereof is specified by X-ray diffraction. Raman spectrum is measured by applying an argon laser beam to a substance and detecting the resulting Raman scattering light; however, since a visible light can generally enter a substance only by about half wavelength, a surface layer of about several hundred Å is observed. In contrast, in X-ray diffraction, the X-ray used has a high transmittancy and reaches as deep as the inside of a substance and accordingly the average of the whole substance is observed; therefore, by investigation in comparison with the result of Raman spectrum, the inside state of negative active material can be grasped.

Specifically explaining, in Raman spectrum, the peak of 1,330 to 1,360 cm⁻¹ corresponds to the peak of amorphous substance and the peak of 1,550 to 1,580 cm⁻¹ corresponds to the peak of crystalline substance. Therefore, it follows that the larger the Ib/Ia of peak intensity Ib to peak intensity Ia, the higher the amorphism of surface. In X-ray diffraction, the sharper the observed peak of a substance, the higher its crystallinity; in order to indicate it numerically, the integral width method of Wilson is used in the present invention and the indication is made in terms of lattice strain and crystallite diameter. In this case, the smaller the lattice strain or the larger the crystallite diameter, the higher the crystallinity.

The second aspect of the present invention is, as described previously, a process for producing a negative active material for lithium secondary battery, which comprises heat-treating a raw material for a base material capable of occluding and releasing lithium ion and a raw material for a surface material covering a surface of the base material, to produce a negative active material for lithium secondary battery comprising the base material and the surface material covering the surface of the base material, the process being characterized in that
the base material comprises a first base material which has come to have lithium ion occludability and releasability as a result of the heat treatment and/or a second base material which is a carbon material inherently having lithium ion occludability and releasability, and
the process comprises coating the raw material for the surface material on the surface of the raw material for the first base material and/or the raw material for the second base material to produce a composite raw material, and then heat-treating the composite raw material. Thereby, the surface of the graphite base material can be covered with a high temperature resistant amorphous carbon material, and it is possible to produce a negative active material which retains a graphite property of hardly showing a reduction in relative discharge capacity and yet being low in the high-temperature deterioration caused by the reaction between surface of negative active material and non-aqueous electrolytic solution. Further, by using a method which comprises coating the raw material for the surface material on the surfaces of the raw material for the first base material and/or the raw material for the second base material and then heat-treating the resulting material to form an integral material, the adhesivity between the base material (graphite) and the surface material (an amorphous carbon material) is enhanced and the peeling of the surface material (an amorphous carbon material) from the base material (graphite) is suppressed; as a result, there can be produced a negative active material capable of providing a lithium secondary battery which hardly shows a reduction in relative discharge capacity even at high temperatures and which is superior in cycle characteristic.

In the present invention, there is preferably used, as the raw material for the first base material and the raw material for the surface material, a raw material, which is carbonizable by a heat treatment, specifically a synthetic resin. There is preferably used, as the raw material for the first base material, a material that is carbonizable by a heat treatment and, as the raw material for the surface material, a material that can become an amorphous carbon material by a heat treatment. Thereby, it is possible to produce a negative active material comprising a base material made of graphite and an amorphous carbon material covering the surface of the base material.

More specifically, an easily graphitizable resin is preferably used as the raw material for the first base material, an easily graphitizable carbon material is preferably used as the raw material for the second base material, and a hardly graphitizable resin is preferably used as the raw material for the surface material.

In the present invention, the above-mentioned raw material for the first base material and/or the above-mentioned raw material for the second base material are preferably used in the form of powder. It is because when the raw material for the first base material and/or the raw base material for the second base material is used in the form of mass or plate, a grinding step is necessary after their coating with the raw material for the surface material; as a result, the surface material is easily peeled from the base material and moreover the base material has a surface portion not coated with the surface material.

In the present invention, it is preferred to use, as the method for coating the raw material for the surface material on the surface of the raw material for the first base material and/or the raw material for the second base material, a spraying method which comprises dissolving the raw material for the surface material in an organic solvent and spraying the organic solution, in a mist, onto the raw material for the first base material and/or the raw material for the second base material, and/or an immersion method which comprises immersing the raw material for the first base material and/or the raw base material for the second base material in the organic solution, because uniform coating of the surface material on the surface of the base material is made possible.

As the method for heat-treating the composite material obtained by using the above-mentioned coating method, there is preferred a method which comprises conducting a heat treatment at such a temperature and for such a time as the raw material for the first base material, constituting the composite raw material is graphitized and the raw material for the surface material, constituting the composite raw material is not graphitized. Thereby, it is possible to produce a negative active material comprising a base material made of graphite and an amorphous carbon material covering the surface of the base material. Incidentally, the specific temperature and time employed are explained in Examples.

The third aspect of the present invention is a process for producing a negative active material for lithium secondary battery by a heat treatment of a graphitic carbon, characterized in that the graphitic carbon is heat-treated in an oxygen-containing atmosphere. In the process, the heat treatment is conducted preferably at a temperature of 500 to 1,000°C. It is because when the heat treatment temperature is less than 500°C, oxidation is unlikely to occur in view of the reaction rate and, when the heat treatment temperature is more than 1,000°C, the graphitic carbon burns completely and comes to have no amorphous layer remaining on the surface. The heat treatment is conducted preferably by using a rotary kiln. There is no particular restriction as to the kind, etc. of the rotary kiln used, and an ordinary type can be used. The oxygen-containing atmosphere may be an atmosphere using air, and the graphitic carbon is preferably a fibrous highly-graphitized carbon because it can give a battery of low internal resistance.

The fourth aspect of the present invention is a process for producing a negative active material for lithium secondary battery by oxidation of a graphitic carbon, characterized in that the oxidation of the graphitic carbon is conducted by an oxidizing agent. In the process, as the oxidizing agent, an inorganic acid is preferably used. As the inorganic acid, a mixed acid of concentrated nitric acid and concentrated sulfuric acid is preferred.

The fifth aspect of the present invention is a process for producing a negative active material for lithium secondary battery by a physical treatment of a graphitic carbon, characterized in that the graphitic carbon is subjected to a high-impact treatment using a hard rotary body. In the high-impact treatment, the circumferential rotary speed of the hard rotary body is preferably 50 to 100 m/sec. It is because when the circumferential rotary speed is 50 m/sec or less, no sufficient impact force is applied to the graphitic carbon and, when the circumferential rotary speed is 100 m/sec or more, the impact applied is too strong and the graphitic carbon is broken. As the hard rotary body, a stainless steel-made or alumina-made substance is preferably used because they have a high hardness and hardly invite contamination with impurities. The hard rotary body may be an ordinary rotary blade.

Next, description is made on the sixth aspect of the present invention. The sixth aspect of the present invention is a lithium secondary battery comprising a positive electrode formed using a positive active material and a negative electrode formed using a negative active material, characterized in that the negative active material has been produced by a production process according to any of the above-mentioned second to fifth aspects of the present invention. Using a negative active material which is hardly deteriorated even at high temperatures, the battery has merits of hardly showing a reduction in relative discharge capacity even at high temperatures and being superior in cycle characteristic.

As other members (materials) constituting the lithium secondary batteries according to the first and sixth aspects of the present invention, various known materials can be used. As the positive active material, for example, there can be used lithium manganese compound oxides such as lithium manganese oxide (LiMn₂O₄) and the like and lithium transition metal compound oxides such as lithium cobalt oxide (LiCoO₂), lithium nickel oxide (LiNiO₂) and the like.

The lithium manganese compound oxide preferably contains a group IIIB element. The reason is not clear; however, when a group IIIB element is contained in the lithium manganese compound oxide, a lithium secondary battery using the lithium manganese compound oxide as the positive active material can have excellent long-term storage capability. Incidentally, the IIIB group element is preferably aluminum (Al) and/or boron (B) in view of the long-term storability of lithium secondary battery, the availability and handleability of a compound containing the element, etc.

The lithium manganese compound oxide is also preferred to contain vanadium (V). A lithium manganese compound oxide containing vanadium (V) is large in crystallite size and can impart, to a lithium secondary battery using it as the positive active material, a superior charge-discharge cycle characteristic at high temperatures.

The lithium manganese compound oxide is also preferred to contain nickel (Ni) and/or titanium (Ti). A lithium manganese compound oxide containing nickel (Ni) and/or titanium (Ti) is low in electrical resistance and a lithium secondary battery using such a compound oxide as the positive active material can have a low internal resistance.

The ratio of lithium (Li) and manganese (Mn) contained in the lithium manganese compound oxide is preferably (Li/Mn) = 0.5 to 0.6 (molar ratio), more preferably 0.52 to 0.6 (molar ratio), further preferably 0.52 to 0.58. A (Li/Mn) of less than 0.5 is not preferred because a lithium secondary battery using such a lithium manganese compound oxide as the positive active material is high in cycle characteristic deterioration. A (Li/Mn) of more than 0.6 is not preferred because the resulting lithium secondary battery has a small capacity.

Then, the process for producing the above-mentioned lithium manganese compound oxide is described briefly. First, there are prepared salts and/or oxides of the individual elements (Li, Mn, other metal elements, etc.) constituting the lithium manganese compound oxide. Needless to say, the salts of these elements, used as raw materials are preferred to have high purity and be inexpensive. Specifically, they are preferably a carbonate, a hydroxide or an organic acid salt; however, a nitrate, a hydrochloride, a sulfate or the like may also be used. As necessary, salts and oxides of Al, B, V, Ni, Ti and other elements may be prepared.

A lithium salt and other raw materials, mentioned above are mixed so as to give an intended composition; the resulting mixed powder is fired in an oxidizing atmosphere at 800 to 850°C for 5 to 50 hours at least once; thereby, a lithium manganese compound oxide whose crystal structure is, for example, a spinel structure, can be obtained.
Incidentally, the oxidizing atmosphere refers generally to an atmosphere having such an oxygen partial pressure that a sample inside the firing furnace can give rise to an oxidation reaction. It is specifically air, an oxygen atmosphere or the like.

As the organic solvent used in the non-aqueous electrolytic solution, there is preferably used a single solvent or a mixed solvent, which can include γ-butyrolactone, tetrahydrofuran, acetonitrile, or a carbonic acid ester solvent such as ethylene carbonate (EC), diethyl carbonate (DEC), dimethyl carbonate (DMC) and propylene carbonate (PC), and the like.

As the electrolyte, there are mentioned lithium fluoride complex compounds such as lithium phosphate hexafluoride (LiPF₆) and lithium borofluoride (LiBF₄), and lithium halides such as lithium perchlorate (LiClO₄). One kind or more kinds thereof are dissolved in the above-mentioned solvent and used. LiPF₆ is particularly preferred because it is hardly decomposed by oxidation and gives a non-aqueous electrolytic solution of high electrical conductivity.

As to the structure of the battery, there can be mentioned a coin cell type battery wherein a separator is disposed between a positive active material and a negative active material both of plate shape and an electrolytic solution is filled; and a cylindrical or box-shaped battery using an electrode body produced by winding or laminating, via a separator, a positive electrode plate obtained by applying a positive active material on a metal foil and a negative electrode plate obtained similarly by applying a negative active material on a metal foil.

### Examples

The present invention is described more specifically below by way of Examples. However, the present invention is in no way restricted by these Examples.

### (Production of negative active materials)

1,000 g of an easily graphitizable resin (a raw material for the first base material) was powdered by a vibration mill in dried air. A carbon material (a raw material for the second base material) was used in a powder form. Separately, 10 g of a hardly graphitizable resin (a raw material for the surface material) was dissolved in 1,000 ml of toluene. In the resulting toluene solution was immersed the powdered easily graphitizable resin or the carbon material powder for 5 minutes to coat the surface of the easily graphitizable resin or the carbon material powder with the hardly graphitizable resin; then, the toluene solution was removed; the coated material was dried in a high-temperature vessel of 100°C for 12 hours to produce composite raw materials. Each composite raw material was heat-treated in a nitrogen atmosphere, then disintegrated, and sieved so as to have particle diameters of 100 µm or less, whereby negative active materials were produced (Examples 1 to 5 and Comparative Example 1). Incidentally, there are shown, in Table 1, the kinds of each easily graphitizable resin, carbon material and hardly graphitizable resin, the conditions of heat treatment, and the Ib/Ia, lattice strain (%) and crystallite diameter (Å) of each negative active material obtained.

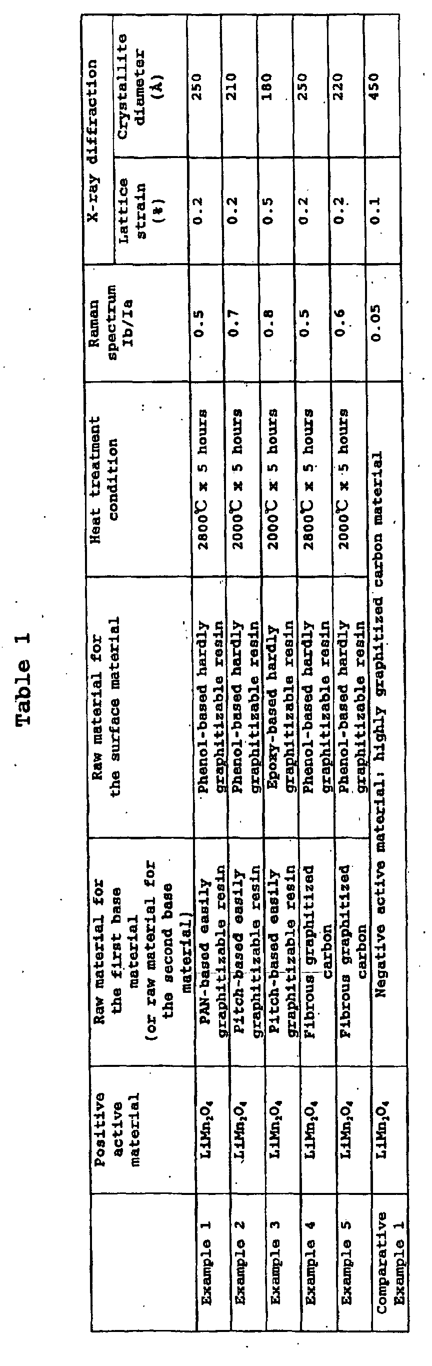

Predetermined amount of fibrous highly-graphitized carbon powder was fed into a rotary kiln; a graphitic carbon was recovered at the downstream of the core tube of the rotary kiln; thereby, various negative active materials were produced (Examples 6 to 12 and Comparative Example 2). The rpm of rotary kiln and the slope of kiln core tube were set so that the speed of treatment became 2 kg/hr. Incidentally, there are shown, in Table 2, the amount of each highly-graphitized carbon heat-treated, the atmosphere of heat treatment, the conditions of heat treatment, and the Ib/Ia, lattice strain (%) and crystallite diameter (Å) of each negative active material obtained.

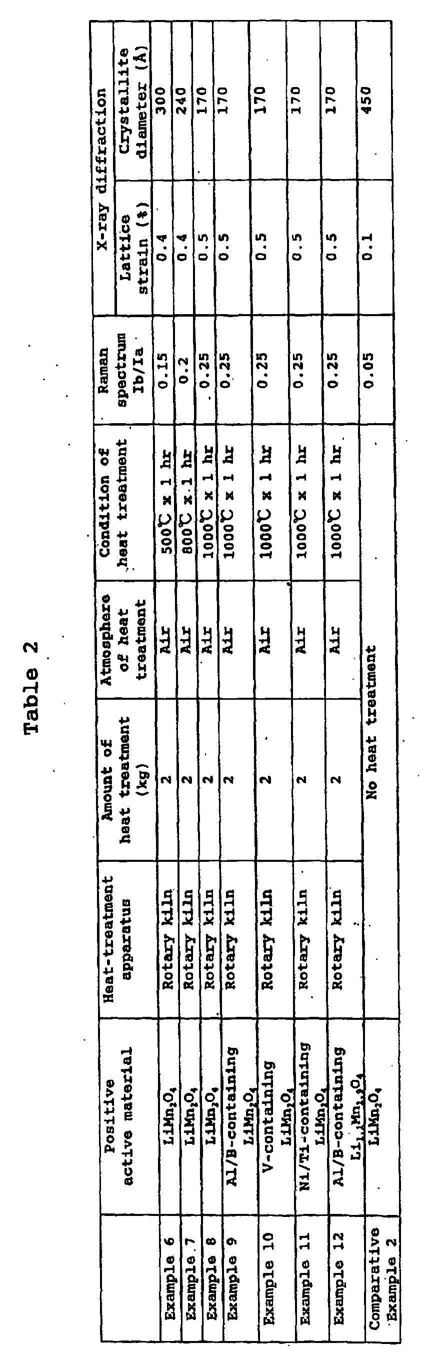

First, 16 liters of a 68% concentrated nitric acid aqueous solution and 32 liters of a 96% concentrated sulfuric acid aqueous solution were mixed at normal temperature to produce a mixed acid of concentrated nitric acid and concentrated sulfuric acid. Into this mixed acid was fed 1 kg of a fibrous highly-graphitized carbon powder, and they were subjected to heating and refluxing at a given temperature for 1 hour. Then, the mixed acid containing the graphite powder was cooled to normal temperature and filtered to recover an oxidized graphite powder. This graphite powder was washed with water and dried at 100°C for 24 hours to produce various negative active materials (Examples 13 to 15 and Comparative Example 3). Incidentally, there are shown, in Table 3, the amount of oxidation, the temperature of oxidation, and the Ib/Ia, lattice strain (%) and crystallite diameter (Å) of each negative active material obtained.

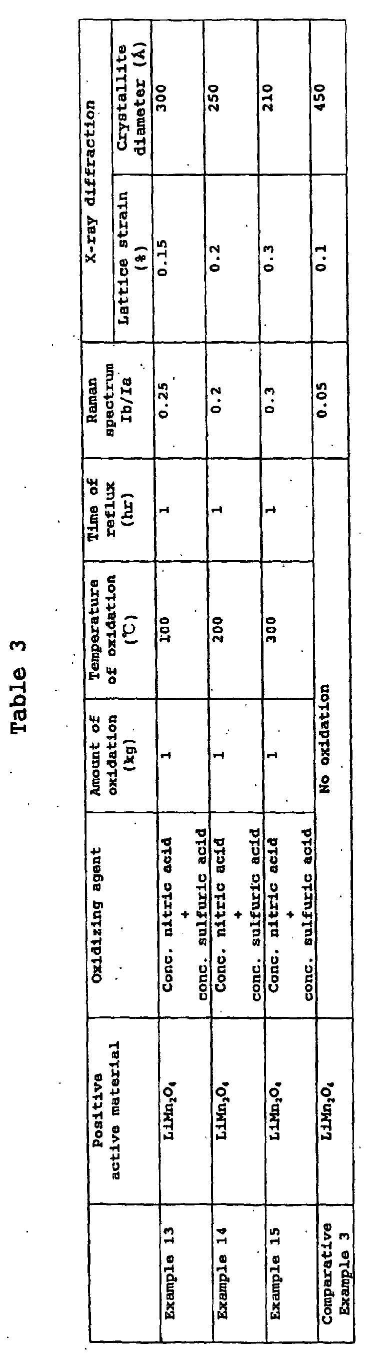

A fibrous highly-graphitized carbon powder of given amount was fed into Hybridizer NHS-1, a product of Nara Kikai K.K., and subjected to a high-impact treatment at a predetermined circumferential speed using rotary blades, to produce negative active materials (Examples 16 to 18 and Comparative Example 4). Incidentally, there are shown, in Table 4, the material of rotary blade, the amount subjected to high-impact treatment, the conditions of high-impact treatment, and the Ib/Ia, lattice strain (%) and crystallite diameter (Å) of each negative active material obtained.

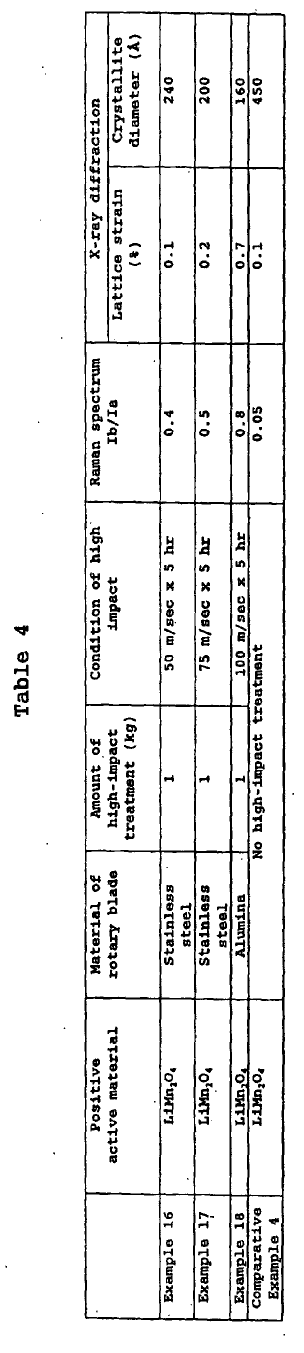

### (Production of the positive active material (lithium manganese compound oxide))

As raw materials for lithium manganese compound oxide, there were prepared manganese salts (Mn salts), i.e. MnO₂ and MnCO₃, and lithium salts (Li salts), i.e. Li₂CO₃ and LiOH. They were mixed in required amounts so as to become a compositional ratio of LiMn₂O₄. Each mixture obtained was fired in an oxygen-containing atmosphere under firing conditions of 800 to 850°C x 5 to 50 hours, to obtain lithium manganese compound oxides (Examples 1 to 8, Examples 13 to 18 and Comparative Examples 1 to 4).

As raw materials for lithium manganese compound oxide, there were prepared manganese salts (Mn salts), i.e. MnO₂ and MnCO₃, and lithium salts (Li salts), i.e. Li₂CO₃ and LiOH. They were mixed in required amounts so as to become a compositional ratio of LiMn₂O₄ or Li_{1.1}Mn_{1.9}O₄. To each mixture obtained were added, as additives, TiO₂, NiO, V₂O₅, B₂O₃ and Al₂O₃ [Example 9: Al₂O₃ = 5, B₂O₃ = 0.5; Example 10: V₂O₅ = 0.5; Example 11: NiO = 1.5, TiO₂ = 1.5; Example 12: Al₂O₃ = 5, B₂O₃ = 0.5 (unit is a ratio (molar ratio, %) relative to the amount (moles) of manganese salt)]. Then, the mixture was wet-stirred, dried and fired in an oxygen-containing atmosphere under conditions of 800 to 850°C x 5 to 50 hours, to obtain lithium manganese compound oxides (Examples 9 to 12).

### (Production of batteries)

The lithium manganese compound oxide obtained by the above-mentioned production process was used as a positive active material. Thereto was added acetylene black as a conductivity-improving agent in an amount of 4% by mass relative to 100% by mass of the compound oxide. Further, a solvent and a binder were added to prepare a positive electrode material slurry: The slurry was applied on both sides of an aluminum foil of 20 µm in thickness, in a thickness (each side) of about 100 µm, to produce a positive electrode plate. The negative active material obtained by the above-mentioned production process was applied on both sides of a copper foil of 10 µm in thickness, in a thickness (each side) of about 80 µm, to produce a negative electrode plate. Using the positive electrode plate and the negative electrode plate, a wound type electrode body was produced and accommodated in a battery case; a non-aqueous electrolytic solution was filled therein; thereby, various lithium secondary batteries were produced (Examples 1 to 18 and Comparative Examples 1 to 4). Here, as the non-aqueous electrolytic solution, there was used a solution obtained by dissolving LiPF₆ as an electrolyte in an equal-volume mixed solvent of EC and DEC in a concentration of 1 mole/l. The capacities of the batteries after initial charge were all about 10 Ah.

### (Testing of cycle characteristic)

A cycle test was conducted by repeating a charge-discharge cycle (one cycle) shown in Fig. 1. That is, one cycle was set at a pattern of discharging a battery having a charge state of 50% of depth of discharge, at a current of 100 A corresponding to 10C (discharge rate) for 9 seconds, then having a rest for 18 seconds, thereafter conducting charge at 70 A for 6 seconds, successively conducting charge at 18 A for 27 seconds to allow the battery to again have a charge state of 50%. Incidentally, by finely controlling the current (18 A) of second charge, the variations in depth of discharge in various cycles were minimized. Further, in order to know the change in battery capacity in the durability test, capacity measurement was made as necessary at a current of 0.2 C at a charge stoppage voltage of 4.1 V at a discharge stoppage voltage of 2.5 V; the battery capacity at a predetermined cycles was divided by the initial battery capacity; the resulting value was taken as relative discharge capacity (%). In Fig. 2 is shown a graph indicating the results of cycle tests of Examples 1 to 5 and Comparative Example 1. In Fig. 3 is shown a graph indicating the results of cycle tests of Examples 6 to 12 and Comparative Example 2. In Fig. 4 is shown a graph indicating the results of cycle tests of Examples 13 to 15 and Comparative Example 3. In Fig. 5 is shown a graph indicating the results of cycle tests of Examples 16 to 18 and Comparative Example 4.

### (Evaluation)

As seen from Fig. 2, the batteries of Examples 1 to 5 according to the present invention achieved a relative discharge capacity of 83% or more in a cycle test of 20,000 times, and exhibited a cycle characteristic better than that of Comparative Example 1 in which a negative active material produced by the present invention was not used. This is thought to be because the surface of a base material made of graphite is covered with a surface material made of an amorphous carbon material and the base material and the surface material are hardly peeled from each other and, therefore, the high-temperature deterioration of the negative active material is inhibited, resulting in improved cycle characteristic.

As seen from Fig. 3, the batteries of Examples 6 to 12 according to the present invention achieved a relative discharge capacity of 85% or more in a cycle test of 20,000 times, and exhibited a cycle characteristic better than that of Comparative Example 2 in which a negative active material produced by the present invention was not used. This is thought to be because the surface of a graphitic carbon'is oxidized and only the surface and its vicinity have been made amorphous and, therefore, the high-temperature deterioration of the negative active material is inhibited. resulting in improved cycle characteristic. The batteries of Examples 9 to 12 have been found to be even higher in relative discharge capacity (%) after 20,000 cycles than batteries having, as the positive active material, a lithium manganese compound oxide without containing Al, B, V, Ni or Ti.

As seen from Fig. 4, the batteries of Examples 13 to 15 according to the present invention achieved a relative discharge capacity of 85% or more in a cycle test of 20,000 times, and exhibited a cycle characteristic better than that of Comparative Example 3 in which a negative active material produced by the present invention was not used. This is thought to be because the surface of a graphitic carbon is oxidized and only the surface and its vicinity have been made amorphous and, therefore, the high-temperature deterioration of the negative active material is inhibited, resulting in improved cycle characteristic.

As seen from Fig. 5, the batteries of Examples 16 to '18 according to the present invention achieved a relative discharge capacity of 84% or more in a cycle test of 20,000 times, and exhibited a cycle characteristic better than that of Comparative Example 4 in which a negative active material produced by the present invention was not used. This is thought to be because a graphitic carbon is subjected to a high-impact treatment and the surface and its vicinity have been made amorphous and, therefore, the high-temperature deterioration of the negative active material is inhibited, resulting in improved cycle characteristic.

The lithium secondary battery of the present invention is preferably used specifically in an internal electrode body of wound type or lamination type, particularly in such an internal electrode body having a capacity of 2 Ah or more. There is no particular restriction as to the applications of the present lithium secondary battery; however, the present battery is preferably used for motor drive of an electric vehicle or a hybrid electric vehicle, or engine start-up, as a battery for vehicle in which discharge of large current takes place frequently and which tends to become a high-temperature state.

### Industrial Applicability

As described above, in the lithium secondary battery of the present invention, the lattice strain and crystallite diameter of the negative active material as measured by X-ray diffractometry are in predetermined ranges, and the Raman spectrum of the negative active material has particular peaks; therefore, the present battery hardly shows a reduction in relative discharge capacity and is superior in cycle characteristic.

According to the process of the present invention for producing a negative active material for lithium secondary battery, a raw material for surface material is coated on the surface of a raw material for base material to produce a composite raw material and this composite raw material is heat-treated; therefore, there can be produced a negative active material which has a high adhesivity between the base material and the surface material and which is hardly deteriorated even at high temperatures.

Further According to the process of the present invention for producing a negative active material for lithium secondary battery, a graphitic carbon is (1) heat-treated in an oxygen-containing atmosphere, (2) oxidized by an oxidizing agent, or (3) subjected to a high-impact treatment by a hard rotary body; therefore, there can be produced a negative active material which has a high adhesivity between the base material and the surface material and which is hardly deteriorated even at high temperatures.

Further, the lithium secondary battery of the present invention uses a negative active material obtained by any of the production processes mentioned above; therefore, it has advantages of hardly showing a reduction in relative discharge capacity and being superior in cycle characteristic.

## Claims

1. A lithium secondary battery comprising a positive electrode formed using a positive active material and a negative electrode formed using a negative active material, **characterized in that**
the negative active material has a lattice strain of 1% or less as measured by X-ray diffractometry,
the negative active material has a crystallite diameter of 150 Å or more as measured by X-ray diffractometry, and
in a Raman spectrum of the negative active material obtained with an argon ion laser beam, a ratio (Ib/Ia) of the peak intensity (Ib) at 1,330 to 1,360 cm⁻¹ to peak intensity (Ia) at 1,550 to 1,580 cm⁻¹ satisfies a relation of 0.1 ≦ (Ib/Ia) ≦ 0.8.

2. A process for producing a negative active material for lithium secondary battery, which comprises heat-treating a raw material for a base material capable of occluding and releasing lithium ion, and a raw material for a surface material covering a surface of the base material, to produce a negative active material for lithium secondary battery comprising the base material and the surface material covering the surface of the base material, **characterized in that**
the base material comprises a first base material which has come to have lithium ion occludability and releasability by the heat-treating and/or a second base material which is a carbon material inherently having lithium ion occludability and releasability, and
the process comprises coating the raw material for the surface material on the surface of the raw material for the first base material and/or a raw material for the second base material to produce a composite raw material, and then heat-treating the composite raw material.

3. A process for producing a negative active material for lithium secondary battery according to Claim 2, wherein a material carbonizable by a heat treatment is used as the raw material for the first base material and as the raw material for the surface material.

4. A process for producing a negative active material for lithium secondary battery according to Claim 2 or 3, wherein a synthetic resin is used as the raw material for the first base material and as the raw material for the surface material.

5. A process for producing a negative active material for lithium secondary battery according to any of Claims 2 to 4, wherein a material graphitizable by a heat treatment is used as the raw material for the first base material.

6. A process for producing a negative active material for lithium secondary battery according to any of Claims 2 to 5, wherein a material capable of becoming an amorphous carbon material by a heat treatment is used as the raw material for the surface material.

7. A process for producing a negative active material for lithium secondary battery according to any of Claims 2 to 6, wherein an easily graphitizable resin is used as the raw material for the first base material.

8. A process for producing a negative active material for lithium secondary battery according to any of Claims 2 to 7, wherein an easily graphitizable carbon material is used as the raw material for the second base material.

9. A process for producing a negative active material for lithium secondary battery according to any of Claims 2 to 8, wherein a hardly graphitizable resin is used as the raw material for the surface material.

10. A process for producing a negative active material for lithium secondary battery according to any of Claims 2 to 9, wherein a powdered material is used as the raw material for the first base material and/or the raw material for. the second base material.

11. A process for producing a negative active material for lithium secondary battery according to any of Claims 2 to 10, wherein as a method for the coating, there is used a spraying method which comprises dissolving the raw material for the surface material in an organic solvent and spraying the organic solution, in a mist, onto the raw material for the first base material and/or the raw material for the second base material, and/or an immersion method which comprises immersing the raw material for the first base material and/or the raw material for the second base material in the organic solution

12. A process for producing a negative active material for lithium secondary battery according to any of Claims 2 to 11, wherein as a method for the heat treatment, there is used a method which comprises conducting a heat treatment at such a temperature and for such a time as the raw material for the first base material, constituting the composite raw material is graphitized and the raw material for the surface material, constituting the composite raw material is not graphitized.

13. A process for producing a negative active material for lithium secondary battery by a heat treatment of a graphitic carbon, **characterized in that** the graphitic carbon is heat-treated in an oxygen-containing atmosphere.

14. A process for producing a negative active material for lithium secondary battery according to Claim 13, wherein the heat treatment is conducted at a temperature of 500 to 1,000 °C.

15. A process for producing a negative active material for lithium secondary battery according to Claim 13 or 14, wherein the heat treatment is conducted using a rotary kiln.

16. A process for producing a negative active material for lithium secondary battery according to any of Claims 13 to 15, wherein air is used as the oxygen-containing atmosphere.

17. A process for producing a negative active material for lithium secondary battery according to any of Claims 13 to 16, wherein a fibrous highly-graphitized carbon is used as the graphitic carbon.

18. A process for producing a negative active material for lithium secondary battery by oxidation of a graphitic carbon, **characterized in that** the oxidation of the graphitic carbon is conducted by an oxidizing agent.

19. A process for producing a negative active material for lithium secondary battery according to Claim 18, wherein an inorganic acid is used as the oxidizing agent.

20. A process for producing a negative active material for lithium secondary battery according to Claim 18 or 19, wherein a mixed acid of concentrated nitric acid and concentrated sulfuric acid is used as the oxidizing agent.

21. A process for producing a negative active material for lithium secondary battery by a physical treatment of a graphitic carbon, **characterized in that** the graphitic carbon is subjected to a high-impact treatment using a hard rotary body.

22. A process for producing a negative active material for lithium secondary battery according to Claim 21, wherein the circumferential rotary speed of the hard rotary body in the high-impact treatment is 50 to 100 m/sec.

23. A process for producing a negative active material for lithium secondary battery according to Claim 21 or 22, wherein a stainless steel-made or alumina-made rotary body is used as the hard rotary body.

24. A process for producing a negative active material for lithium secondary battery according to any of Claims 21 to 23, wherein a rotary blade is used as the hard rotary body.

25. A lithium secondary battery comprising a positive electrode formed using a positive active material and a negative electrode formed using a negative active material, **characterized in that** the negative active material has been produced by a process for producing a negative active material for lithium secondary battery set forth in any of Claims 2 to 24.

26. A lithium secondary battery according to Claim 1 or 25, wherein the positive active material is a lithium manganese compound oxide.

27. A lithium secondary battery according to Claim 26, wherein crystal structure of the lithium manganese compound oxide is a spinel structure.

28. A lithium secondary battery according to Claim 26 or 27, wherein the lithium manganese compound oxide contains a group IIIB element.

29. A lithium secondary battery according to Claim 28, wherein the group IIIB element is aluminum (Al) and/or boron (B).

30. A lithium secondary battery according to any of Claims 26 to 29, wherein the lithium manganese compound oxide contains vanadium (V).

31. A lithium secondary battery according to any of Claims 26 to 30, wherein the lithium manganese compound oxide contains nickel (Ni) and/or titanium (Ti).

32. A lithium secondary battery according to any of Claims 26 to 31, wherein the ratio of lithium (Li) and manganese (Mn) in the lithium manganese compound oxide is (Li/Mn) = 0.5 to 0.6 (molar ratio).

33. A lithium secondary battery according to any of Claims 1 and 25 to 32, wherein the battery capacity is 2 Ah or more.

34. A lithium secondary battery according to any of Claims 1 and 25 to 33, which is for mounting on a vehicle.

35. A lithium secondary battery according to Claim 34, which is for engine start.

36. A lithium secondary battery according to Claim 34 or 35, which is for an electric vehicle or a hybrid electric vehicle.
